# EUROPÄISCHE PATENTSCHRIFT

(11) **EP 4 377 561 B1**
(45) Veröffentlichungstag und Bekanntmachung des Hinweises auf die Patenterteilung: **08.10.2025**
(21) Anmeldenummer: 22755169.4
(22) Anmeldetag: 25.07.2022
(51) Int. Cl.: F01N 3/20, F01N 3/30, F01N 13/00, F01N 9/00

(54) **ABGASNACHBEHANDLUNGSVORRICHTUNG UND BRENNKRAFTMASCHINE**
EXHAUST GAS AFTER-TREATMENT DEVICE AND INTERNAL COMBUSTION ENGINE
DISPOSITIF DE POST-TRAITEMENT DES GAZ D'ÉCHAPPEMENT ET MOTEUR À COMBUSTION INTERNE

(30) Priorität: 26.07.2021 DE 102021119276
(43) Veröffentlichungstag der Anmeldung: 05.06.2024
(73) Patentinhaber: Rolls-Royce Solutions GmbH, 88045 Friedrichshafen (DE)
(72) Erfinder: LORENZ, Ingo, 94127 Neuburg am Inn (DE); LORENZ, Manuel, 94094 Rotthalmünster (DE); HÖLLDOBLER, Simon, 94140 Ering (DE); BIERINGER, Tobias, 94542 Haarbach (DE); KLUIBER, Dominik, 84385 Egglham (DE); WITZIGMANN, Dietmar, 88142 Wasserburg (DE); MOSER, Andreas, 94099 Ruhstorf (DE); BRUCKMEIER, Andreas, 94072 Bad Füssing (DE); KOVAC, Julian, 4780 Schärding (AT); HUPFLOHER, Helmut, 94424 Arnstorf (DE)
(74) Vertreter: Kordel, Mattias
(86) Internationale Anmeldenummer: PCT/EP2022/070843
(87) Internationale Veröffentlichungsnummer: WO 2023/006690

(56) Entgegenhaltungen:
- EP-A1- 1 348 840
- EP-B1- 3 497 310
- KR-A- 20110 111 644
- US-A1- 2004 104 577
- US-A1- 2017 037 764
- US-B1- 11 066 971

## Beschreibung

Die Erfindung betrifft eine Abgasnachbehandlungsvorrichtung und eine Brennkraftmaschine.

Abgasnachbehandlungsvorrichtungen und Brennkraftmaschinen sind aus dem Stand der Technik bekannt (EP 1 348 840 A1; EP 3 497 310 B1; US 11,066,971 B1; US 2017/0037764 A1; US 2004/0104577 A1; KR 10-2011-0111644). Um Schadstoffe in einem Abgas einer Brennkraftmaschine zu reduzieren, sind solche Abgasnachbehandlungsvorrichtungen typischerweise in einem Abgasstrang der Brennkraftmaschine angeordnet. Dadurch ist es möglich, dass die Brennkraftmaschinen und die damit betriebenen Fahrzeuge insbesondere gesetzlich vorgegebene Schadstoffgrenzwerte einhalten können. Derartige Grenzwertvorgaben sind insbesondere im Pkw- und Lkw-Verkehr verbreitet und haben zumeist eine lokale und/oder regionale Gültigkeit.

Darüber hinaus gibt es aber auch Brennkraftmaschinen, die in einem Bereich eingesetzt werden, in dem keine Abgasnachbehandlung erforderlich und/oder gesetzlich vorgeschrieben ist. Aus Kostengründen und/oder um die Konstruktion solcher Brennkraftmaschinen zu vereinfachen, wird hierbei oftmals auf eine Abgasnachbehandlung verzichtet. Dennoch kann es - beispielsweise aus ökologischen Gründen und/oder um auf sich eventuell ändernde gesetzliche Vorgaben vorzubereiten beziehungsweise um insbesondere temporären, lokalen Schadstoffemissionsschutzanforderungen gerecht zu werden - bei solchen Brennkraftmaschinen zumindest zeitweise vorteilhaft sein, eine Abgasnachbehandlung einzurichten.

Insbesondere bei großen, stationären Brennkraftmaschinen, ganz besonders solchen, die als Kraftwerk ortsfest installiert sind, kann auch ein temporärer Bedarf an einer Abgasnachbehandlung bestehen. Diese temporäre Notwendigkeit der Abgasnachbehandlung kann sich einerseits aus saisonalen und/oder wetterbedingten Umständen, aber auch andererseits aus sich ändernden, gesetzlichen Rahmenbedingungen ergeben.

Nachteil der bekannten Abgasnachbehandlungsvorrichtung ist, dass diese fest mit der Brennkraftmaschine verbunden und somit nicht flexibel einsetzbar sind. Insbesondere eine flexible, temporäre Abgasnachbehandlung ist nur möglich, wenn die Abgasnachbehandlungsvorrichtung bereits vorhanden und im Bedarfsfall beispielsweise über eine Ventilschaltung zu- oder abgeschaltet wird. Dadurch sind die Kosten sehr hoch, da jede Brennkraftmaschine deren Schadstoffemissionen zumindest zeitweise reduziert werden sollen, eine solche Abgasnachbehandlungsvorrichtung aufweisen muss.

Die Aufgabe der vorliegenden Erfindung ist es, eine Abgasnachbehandlungsvorrichtung zu schaffen, wobei die genannten Nachteile vermieden sind. Insbesondere ist es Aufgabe der Erfindung eine flexibel einsetzbare Abgasnachbehandlungsvorrichtung zu schaffen und Kosten einzusparen.

Die Aufgabe wird gelöst, indem eine Abgasnachbehandlungsvorrichtung mit den Merkmalen des Anspruchs 1 und eine Brennkraftmaschine mit den Merkmalen des Anspruchs 9 geschaffen werden. Vorteilhafte Ausgestaltungen ergeben sich aus den abhängigen Ansprüchen.

Die Abgasnachbehandlungsvorrichtung weist eine Katalysatoranlage und einen insbesondere begehbaren Container auf, wobei die Katalysatoranlage in einem Innenraum des Containers angeordnet ist, wobei der Container zumindest zwei vorzugsweise verschließbar ausgebildete Öffnungen aufweist, wobei eine erste Öffnung der zwei Öffnungen zuströmseitig mit der Katalysatoranlage verbunden ist, und wobei eine zweite Öffnung der zwei Öffnungen abströmseitig mit der Katalysatoranlage verbunden ist. Hierdurch ist eine flexibel einsetzbare Abgasnachbehandlungsvorrichtung geschaffen, die im Bedarfsfall insbesondere mittels der ersten Öffnung an eine Abgasöffnung einer externen Brennkraftmaschine anschließbar ist. Sobald kein Bedarf mehr an einer Abgasnachbehandlung besteht, kann die Abgasnachbehandlungsvorrichtung wieder von der Brennkraftmaschine getrennt werden, separat von dieser transportiert und anderweitig, insbesondere zur Abgasnachbehandlung einer weiteren Brennkraftmaschine eingesetzt werden. Dadurch werden auch Herstellungskosten reduziert, da nicht jede Brennkraftmaschine eine eigene Abgasnachbehandlungsvorrichtung benötigt.

Unter eine Katalysatoranlage wird hier insbesondere eine Anlage verstanden, die dazu ausgebildet und eingerichtet ist, einen Schadstoffanteil in einem zugeführten Fluid, insbesondere Gasgemisch, ganz besonders einem Abgas, zu reduzieren.

Vorzugsweise umfasst die Katalysatoranlage zumindest einen Zuströmpfad, einen Abströmpfad und zumindest eine Katalysatorvorrichtung, welche in Strömungsrichtung zwischen Zuström- und Abströmpfad angeordnet ist. Dabei ist die Katalysatoranlage derart ausgebildet und eingerichtet, dass der Katalysatorvorrichtung - im Betriebszustand der Abgasnachbehandlungsvorrichtung - zuströmseitig, also über den Zuströmpfad, ein Abgas zugeführt wird, wobei das zugeführte Abgas in der Katalysatorvorrichtung nachbehandelt, insbesondere ein Schadstoffanteil des Abgases reduziert wird. Stromabwärts des Ortes der Abgasnachbehandlung, insbesondere stromabwärts der Katalysatorvorrichtung, ist die Katalysatorvorrichtung abströmseitig, also über den Abströmpfad, mit der zweiten Öffnung strömungstechnisch verbunden. Dadurch kann das nachbehandelte Abgas über den Abströmpfad und die zweite Öffnung abströmen, insbesondere aus dem Container herausgeführt und ausgestoßen werden.

Unter einem Container wird hier insbesondere ein begehbarer Container verstanden, der vorzugsweise vier Seitenwände, einen Boden und ein Dach aufweist. Insgesamt ist der Container somit vorzugsweise quaderförmig. Ferner ist der Container vorzugsweise wetterfest ausgebildet, sodass dieser ohne weiteren Schutz Wettereinflüssen ausgesetzt werden kann, ohne dass im Innenraum angeordnete Komponenten Schaden nehmen würden. Zudem ist der Container vorzugsweise ausgebildet und eingerichtet, um eine Verlagerung des Containers, insbesondere einen Transport mit möglichst geringem Aufwand zu ermöglichen. Ganz besonders ist der Container als genormter Container, insbesondere ISO-Container, ausgebildet. Derartige genormte Container sind beispielsweise aus dem Frachtverkehr, insbesondere Seefracht, Luftfracht und Lkw-Fracht, bekannt.

Vorzugsweise umfasst die Katalysatoranlage mehrere Katalysatorvorrichtungen, insbesondere einen Oxidationskatalysator und einen SCR-Katalysator. Dadurch ist die Abgasnachbehandlung verbessert, insbesondere indem ein Schadstoffanteil und/oder mehrere verschiedene Schadstoffanteile in dem zugeführten Abgas noch stärker reduzierbar ist. Alternativ umfasst die Katalysatoranlage nur eine Katalysatorvorrichtung, insbesondere einen SCR-Katalysator, wodurch die Kosten und der Konstruktionsaufwand der Abgasnachbehandlungsvorrichtung insgesamt niedrig sind.

Die zumindest zwei Öffnungen sind vorzugsweise verschließbar ausgebildet, wobei die zumindest zwei Öffnungen - insbesondere in einem Transportzustand der Abgasnachbehandlungsvorrichtung - verschlossen sind. In dem Betriebszustand der Abgasnachbehandlungsvorrichtung ist die erste Öffnung vorzugsweise geöffnet und auf einer Außenseite des Containers mit einer externen Brennkraftmaschine verbunden. Die zweite Öffnung ist in dem Betriebszustand ebenfalls geöffnet und als Abgasausstoß für das nachbehandelte Abgas eingerichtet. Die zumindest zwei Öffnung sind dabei vorzugsweise in einer Außenwandung des Containers, insbesondere einer oder mehreren der vier Seitenwände, dem Boden und/oder dem Dach, ausgebildet.

Gemäß einer Weiterbildung der Erfindung ist vorgesehen, dass die Abgasnachbehandlungsvorrichtung eine Arbeitsplattform aufweist, die auf einem Containerdach des Containers angeordnet ist. Dadurch ist eine einfache Montage von auf dem Containerdach zu montierenden Bauteilen möglich.

Vorzugsweise weist die Arbeitsplattform einen rutschfesten Boden auf, sodass die Arbeitssicherheit erhöht ist. Ferner weist die Arbeitsplattform bevorzugt ein klappbares Geländer auf, welches - insbesondere im Transportzustand - zusammengeklappt und an das Containerdach und/oder die Arbeitsplattform angelegt ist. Dadurch ist eine Gesamthöhe der Abgasnachbehandlungsvorrichtung, insbesondere zu Transportzwecken reduzierbar, wodurch der Transport vereinfacht ist.

Ferner weist die Abgasnachbehandlungsvorrichtung vorzugsweise eine Leiter auf, die derart anordenbar, insbesondere angeordnet ist, dass die Arbeitsplattform mit Hilfe dieser Leiter besteigbar ist.

Gemäß einer Weiterbildung der Erfindung ist vorgesehen, dass die Abgasnachbehandlungsvorrichtung einen Abgaskamin aufweist, der - zumindest in einem Betriebszustand der Abgasnachbehandlungsvorrichtung - außerhalb des Containers an der zweiten Öffnung montiert ist. Hierdurch ist ein guter Abzug des nachbehandelten Abgases geschaffen und kein externer Abgaskamin erforderlich. Zudem ist der Abgaskamin in dem Transportzustand vorzugsweise nicht montiert, sodass die Abgasnachbehandlungsvorrichtung als Ganzes mit geringem Aufwand transportiert werden kann, wobei die Abgasnachbehandlungsvorrichtung eine vergleichsweise geringe Höhe aufweist.

Vorzugsweise weist die Abgasnachbehandlungsvorrichtung zudem ein Verbindungselement auf, welches dazu ausgebildet und eingerichtet ist, die erste Öffnung mit einer externen Brennkraftmaschine zu verbinden. Insbesondere im Betriebszustand ist die erste Öffnung über das Verbindungselement mit einer Abgasausstoßöffnung der externen Brennkraftmaschine verbunden. Dadurch kann das Abgas der externen Brennkraftmaschine direkt in die Abgasnachbehandlungsvorrichtung eingeführt und dort von der Katalysatoranlage nachbehandelt werden.

Vorzugsweise weist der Container zumindest eine Wartungsöffnung, insbesondere eine Wartungstür auf. Dadurch sind die in dem Innenraum des Containers angeordneten Komponenten, insbesondere die Katalysatoranlage, von außen zumindest teilweise zugänglich und/oder austauschbar. Besonders bevorzugt weist der Container an seinen schmalen Stirnseiten jeweils eine große Wartungstür, die besonders bevorzugt als Doppeltür ausgebildet ist, auf. Somit sind auch große Komponenten, insbesondere ganze Bauteile der Katalysatoranlage im Wartungsfall aus dem Container herausnehmbar. Insbesondere können diese Komponenten im Defektfall über diese Wartungstüren ausgetauscht werden.

Gemäß der Erfindung ist vorgesehen, dass der Container zumindest eine Schienenvorrichtung aufweist, wobei zumindest ein Teil der Katalysatoranlage auf der Schienenvorrichtung verlagerbar angeordnet ist. Hierdurch ist eine Verlagerung der Katalysatoranlage insbesondere zu Wartungszwecken vereinfacht. Insbesondere ist die Katalysatoranlage zumindest teilweise mittels der Schienenvorrichtung aus dem Container herausfahrbar und/oder austauschbar. Dadurch wird die Wartung und die Reparatur der Abgasnachbehandlungsvorrichtung vereinfacht.

Gemäß einer Weiterbildung der Erfindung ist vorgesehen, dass die Katalysatoranlage zur Versorgung mit Frischluft eine Frischluftzuführvorrichtung aufweist, wobei die Frischluftzuführvorrichtung eine erste Strömungsöffnung aufweist, die zumindest mittelbar mit der Katalysatoranlage, vorzugsweise der Katalysatorvorrichtung, insbesondere strömungstechnisch verbunden ist, und wobei die Frischluftzuführvorrichtung eine zweite Strömungsöffnung aufweist, die zur strömungstechnischen Verbindung mit einer Frischluftquelle ausgebildet und eingerichtet ist, insbesondere strömungstechnisch verbunden ist. Damit ist dem zugeführten Abgas Frischluft zumischbar, wodurch insbesondere technische, chemische und/oder gesetzliche Temperaturgrenzwerte bei der Abgasnachbehandlung eingehalten werden können. Zudem ist es durch das Zumischen von Frischluft möglich, eine Reaktionstemperatur der katalytischen Reaktionen zur Abgasnachbehandlung zu kontrollieren und vorzugsweise in einem Sollbereich zu halten, in welchem das nachzubehandelnde Abgas, insbesondere einzelne Gasbestandteile des Abgases, besonders effizient nachbehandelbar ist. Zudem ist durch das Zumischen von Frischgas eine Reaktionsumgebung, insbesondere eine Reaktionstemperatur, einstellbar, welche einzelne Abgasnachbehandlungsreaktionen derart begünstig, dass die verstärkt ablaufen. Ganz besonders wird dadurch vermieden, dass die Katalysatoranlage und - vorrichtung derart überhitzt, dass eine Verschlechterung der Abgasnachbehandlung eintreten würde. Insbesondere können dadurch unterschiedliche Typen von Brennkraftmaschinen an die Abgasnachbehandlungsvorrichtung angeschlossen und deren Abgase wirksam nachbehandelt werden.

Dabei wird die zugeführte Frischluftmenge vorzugsweise in Abhängigkeit von der angeschlossenen Brennkraftmaschine bestimmt, sodass stets eine optimale Schadstoffreduzierung in dem Abgas gewährleistet ist. Dadurch ist auch die flexible Einsetzbarkeit der Abgasnachbehandlungsvorrichtung verbessert.

Als Frischluftquelle wird hier insbesondere eine Umgebung des Containers, insbesondere die Atmosphäre, verstanden. Alternativ wird darunter ein Frischluftreservoir verstanden, welches vorzugsweise als Frischluftspeichervorrichtung ausgebildet ist. Ein solches Frischluftreservoir ist vorzugsweise Bestandteil der Abgasnachbehandlungsvorrichtung und in dessen Innenraum angeordnet, dadurch kann unabhängig von der äußeren Atmosphäre Frischluft zugeführt werden, sodass die Abgasnachbehandlungsvorrichtung auch in Umgebungen einsetzbar ist, in denen keine oder zu wenig Frischluft vorhanden ist.

Gemäß einer Weiterbildung der Erfindung ist vorgesehen, dass in einer Wandung des Containers zur Raumtemperaturregelung zumindest ein insbesondere frequenzgesteuerter Axialventilator angeordnet ist, der dazu ausgebildet und eingerichtet ist, einen Luftstrom zwischen Innenraum und der Frischluftquelle, insbesondere einer äußeren Umgebung des Containers, zu erzeugen. Dadurch wird eine Überhitzung des Innenraums und der darin angeordneten Bauteile vermieden. Auch wird dadurch eine Frischluftversorgung für den Innenraum des Containers bereitgestellt, wodurch sich Personen in dem Container gefahrlos aufhalten können und keine Erstickung droht.

Gemäß einer Weiterbildung der Erfindung ist vorgesehen, dass die Katalysatoranlage einen SCR-Katalysator aufweist, wobei in einem Innenraum des Containers zumindest ein Reduktionsmittelreservoir angeordnet ist, welches über eine Reduktionsmittelversorgungsleitung mit der Katalysatoranlage verbunden ist. Dadurch umfasst die Abgasnachbehandlungsvorrichtung alle relevanten Teile, um das zugeführte Abgas mittels des SCR-Katalysators nachzubehandeln und in dem Abgas enthaltene Schadstoffe abzubauen. Insbesondere muss das Reduktionsmittel somit nicht von extern zugeführt werden. Dadurch ist die Abgasnachbehandlungsvorrichtung flexibel einsetzbar und nach einem Ortswechsel schnell einsatzbereit.

Unter einem SCR-Katalysator wird hier insbesondere ein Katalysator verstanden, der zur selektiven katalytischen Reduktion eines Abgasbestandteils, insbesondere von Stickoxiden des Abgases, ausgebildet und eingerichtet ist.

Vorzugsweise ist das zumindest eine Reduktionmittelreservoir über die Wartungstüren, insbesondere die stirnseitigen Wartungstüren zugänglich und/oder austauschbar.

Bevorzugt werden als das zumindest eine Reduktionsmittelreservoir zwei, insbesondere gleich große IBC-Container (Intermediate Bulk Container) verwendet, wobei jedes der Reduktionsmittelreservoire, insbesondere jeder der IBC-Container, vorzugsweise ein Fassungsvermögen zwischen 500 und 4000 Liter, bevorzugt 1000 Liter, aufweist. Zudem ist der Innenraum vorzugsweise doppelt so breit wie ein IBC-Container, sodass die beiden IBC-Container platzsparend nebeneinander angeordnet werden können.

Das Reduktionsmittelreservoir ist bevorzugt an einer Stirnseite des Containers in dem Innenraum angeordnet, sodass dieses über eine der stirnseitigen Wartungsöffnungen insbesondere zu Betankungszwecken gut zugänglich und vorzugsweise aus dem Innenraum herausnehmbar und somit austauchbar ist.

Vorzugsweise wird vorliegend als Reduktionsmittel ein Fluid verwendet, welches einen Harnstoff beinhaltet. Besonders bevorzugt wird eine Urea-Lösung als Reduktionsmittel verwendet.

Gemäß einer Weiterbildung der Erfindung ist vorgesehen, dass in dem Innenraum zur Eindüsung eines Reduktionsmittels eine Druckluftvorrichtung angeordnet ist, wobei die Druckluftvorrichtung mit der Reduktionsmittelversorgungsleitung wirkverbunden ist. Somit kann das Reduktionsmittel mit einem geeigneten Druck in die Katalysatoranlage eingedüst werden. Da der Abgasdruck des zugeführten Abgases je nach angeschlossener, externer Brennkraftmaschine variieren kann, ist die Abgasnachbehandlungsvorrichtung hierdurch flexibel und in Kombination mit einer Vielzahl verschiedenartiger Brennkraftmaschinen einsetzbar.

Die Druckluftvorrichtung weist vorzugsweise einen Kompressor und einen Druckluftspeicher auf. Dadurch ist ein konstanter Druck bereitgestellt und Druckschwankungen beim Eindüsen werden vermieden.

Vorzugsweise mündet die Reduktionsmittelversorgungsleitung in eine mit der Druckluft beaufschlagte Druckluftleitung. Somit wird das Reduktionsmittel von der Druckluft in der Druckluftleitung mitgerissen und dem Zuströmpfad und/oder direkt der Katalysatorvorrichtung zugeführt.

Ferner ist in dem Innenraum vorzugsweise eine Dosiervorrichtung angeordnet, welche ausgebildet und eingerichtet ist, ein der Katalysatorvorrichtung zuzuführendes Reduktionsmittel zu dosieren. Somit kann die Abgasnachbehandlungsvorrichtung stets auf sich ändernde externe Umstände, insbesondere verschiedenartige externen Brennkraftmaschinen angepasst werden.

Gemäß einer Weiterbildung der Erfindung ist vorgesehen, dass in dem Innenraum ein Steuergerät, welches zur Steuerung der Katalysatoranlage ausgebildet und eingerichtet ist, angeordnet ist. Dadurch ist kein weiteres Steuergerät erforderlich und das zur Steuerung der Katalysatorvorrichtung erforderliche Steuergerät wird stets mit der Abgasnachbehandlungsvorrichtung mitgeführt. Besonders bevorzugt ist das Steuergerät in einem begehbaren Teil des Containers, insbesondere in einem Steuerraum, angeordnet. Somit kann die Abgasnachbehandlungsvorrichtung von einer Person in dem Container gesteuert werden, wobei insbesondere die Personen und das Steuergerät vor Wettereinflüssen geschützt sind.

Das Steuergerät ist dabei vorzugsweise ausgebildet und eingerichtet, um eine Dosiermenge des Reduktionsmittels und/oder einen Eindüsungsdruck der Druckluftvorrichtung insbesondere in Abhängigkeit von der Brennkraftmaschine und/oder dem zugeführten Abgas, ganz besonders dessen chemischer Zusammensetzung, einzustellen. Das Einstellen der geeigneten Dosiermenge erfolgt dabei vorzugsweise automatisch, insbesondere indem ein Abgasdruck und/oder die chemische Zusammensetzung in dem Zuströmpfad gemessen wird, und/oder manuell durch eine Person. Dadurch ist die Abgasnachbehandlungsvorrichtung flexibel und in Kombination mit einer Vielzahl verschiedenartiger Brennkraftmaschinen nutzbar, wobei stets eine optimale, auf das jeweilige Abgas abgestimmte Abgasnachbehandlung einstellbar ist.

Die Abgasnachbehandlungsvorrichtung und insbesondere das Steuergerät ist somit ausgebildet und eingerichtet, um die Abgasnachbehandlung für die Vielzahl verschiedenartiger Brennkraftmaschinen einzustellen. Dazu sind vorzugsweise in dem Steuergerät brennkraftmaschinenspezifische Datensätze und/oder Kennfelder zur Abgasnachbehandlung hinterlegbar. Diese sind mittels des Steuergeräts einfach auswählbar, um somit stets eine für die jeweils angeschlossene Brennkraftmaschine geeignete und optimale Abgasnachbehandlung einzustellen.

Vorzugsweise ist das Steuergerät ausgebildet und eingerichtet, um das Reduktionsmittel in Abhängigkeit von einer Reduktionsmittelart bereitzustellen, insbesondere zu dosieren und/oder den Eindüsungsdruck einzustellen. In dem Reduktionsmittelreservoir sind also verschiedenartige Reduktionsmittel einfüllbar, wobei mittels des Steuergeräts stets eine geeignete, insbesondere optimale Dosiermenge und/oder Eindüsungsdruck einstellbar ist.

Gemäß einer Weiterbildung der Erfindung ist vorgesehen, dass die Abgasnachbehandlungsvorrichtung als Fahrzeug oder als Fahrzeuganhänger ausgebildet ist. Dadurch ist die Abgasnachbehandlungsvorrichtung besonders flexibel einsetzbar und mit geringem Aufwand und schnell von einem Einsatzort an einen anderen am Einsatzort verlagerbar.

Vorzugsweise ist der Fahrzeuganhänger als Lkw-Anhänger ausgebildet. Ferner bevorzugt weist der Fahrzeuganhänger und/oder das Fahrzeug einen Montagekran auf. Mittels dieses Montagekrans ist somit auf einfache Weise insbesondere der Abgaskamin und/oder das Verbindungselement an der ersten und/oder zweiten Öffnung montierbar.

Die Aufgabe wird insbesondere auch gelöst, indem eine Brennkraftmaschine mit einer Abgasnachbehandlungsvorrichtung gemäß einer der zuvor genannten Ausführungsbeispiele geschaffen wird, wobei ein Abgasauslass der Brennkraftmaschine mit der ersten Öffnung der Abgasnachbehandlungsvorrichtung strömungstechnisch verbunden ist. Hierdurch ergeben sich die bereits zuvor im Zusammenhang mit den Ausführungsbeispielen der Abgasnachbehandlungsvorrichtung genannten Vorteile.

Die hier angesprochene, insbesondere externe Brennkraftmaschine ist vorzugsweise als Hubkolbenmotor ausgebildet. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor, als Benzinmotor, als Gasmotor zum Betrieb mit Erdgas, Biogas, Sondergas oder einem anderen geeigneten Gas oder einem synthetischen Kraftstoff, ausgebildet. Insbesondere wenn die Brennkraftmaschine als Gasmotor ausgebildet ist, ist sie für den Einsatz in einem Blockheizkraftwerk zur stationären Energieerzeugung geeignet.

Die Erfindung wird im Folgenden anhand der Zeichnungen näher erläutert. Dabei zeigen:
- Figur 1: eine perspektivische Darstellung einer Abgasnachbehandlungsvorrichtung,
- Figur 2: die in Figur 1 dargestellte Abgasnachbehandlungsvorrichtung in einer gedrehten Darstellung mit einem montierten Abgaskamin,
- Figur 3: eine perspektivische Schnittdarstellung der Abgasnachbehandlungsvorrichtung, insbesondere den Innenraum des Containers,
- Figur 4: einen ersten Teil der Abgasnachbehandlungsvorrichtung in einer Schnittdarstellung in einer Draufsicht,
- Figur 5: eine perspektivische Schnittdarstellung eines zweiten Teils der Abgasnachbehandlungsvorrichtung, und
- Figur 6: die Abgasnachbehandlungsvorrichtung in einem an eine Brennkraftmaschine angeschlossenen Betriebszustand.

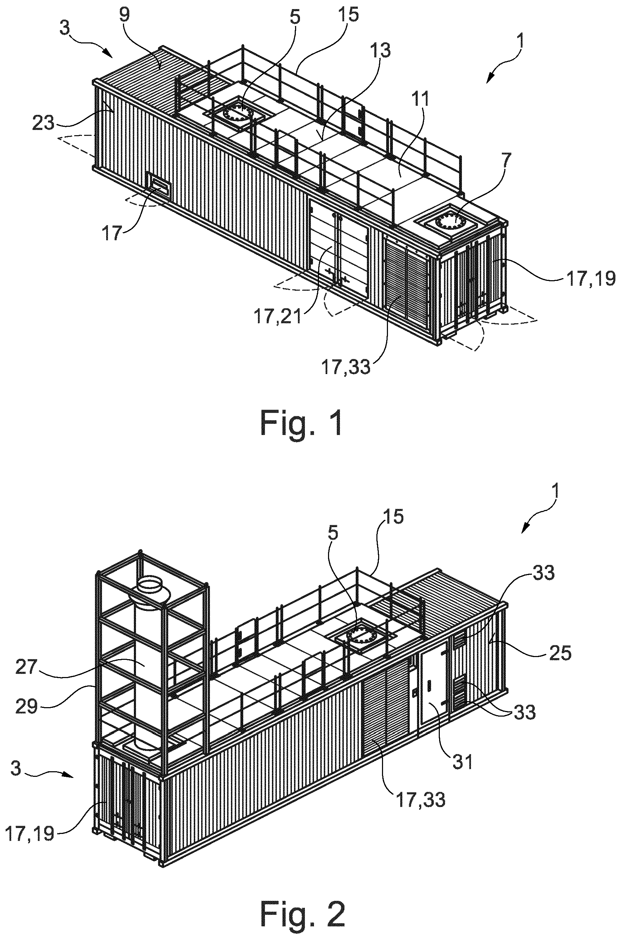

**Fig. 1** zeigt eine Abgasnachbehandlungsvorrichtung 1 mit einem Container 3, in dessen Innenraum eine in Figur 1 nicht dargestellte Katalysatoranlage angeordnet ist. Der Container 3 weist zumindest zwei Öffnungen auf, hier eine erste Öffnung 5 und eine zweite Öffnung 7. Über die erste Öffnung 5 ist die im Innern des Containers 3 angeordnete Katalysatoranlage mit einer externen Brennkraftmaschine, insbesondere einer Abgasöffnung der externen Brennkraftmaschine, verbindbar. Dadurch ist eine flexibel einsetzbare Abgasnachbehandlungsvorrichtung 1 geschaffen. Diese kann an eine Vielzahl verschiedener externer Brennkraftmaschinen angeschlossen werden und deren Abgase nachbehandeln, insbesondere darin enthaltene Schadstoffe reduzieren.

Beide Öffnungen, also die erste Öffnung 5 und die zweite Öffnung 7, sind hier vorzugsweise verschließbar ausgebildet und in dem hier dargestellten Zustand verschlossen.

Zudem ist die Abgasnachbehandlungsvorrichtung 1 mittels des Containers 3 einfach zu transportieren. Der Container 3 ist dabei vorzugsweise als genormter Container, insbesondere als ISO-Container, ausgebildet. Jedenfalls weist der Container 3 vorzugsweise frachtübliche Maße auf, sodass dieser mittels bekannter Frachtinfrastrukturen, insbesondere Frachtkränen und Frachttransportern handhabbar ist.

Ferner ist in Figur 1 zu erkennen, dass auf einem Containerdach 9 des Containers 3 eine Arbeitsplattform 11 angeordnet ist. Diese Arbeitsplattform 11 umfasst vorzugsweise einen rutschfesten Boden 13 sowie ein klappbares Geländer 15, welches hier in einem aufgeklappten Zustand dargestellt ist. In einem hier nicht dargestellten zusammengeklappten Zustand liegt das Geländer 15 vorzugsweise am Containerdach 9 an, wobei das Geländer 15 in diesem zusammengeklappten Zustand bevorzugt an dem Containerdach 9 transportsicher fixierbar ist.

Durch das Einklappen des Geländers 15 ist eine Gesamthöhe der Abgasnachbehandlungsvorrichtung 1 reduziert, sodass die gesamte Abgasnachbehandlungsvorrichtung 1, insbesondere nach einem Verladen auf einen Lkw-Anhänger, straßenverkehrstypische Maximalhöhen nicht überschreitet. Somit ist die Abgasnachbehandlungsvorrichtung 1 mittels bekannter Lkw-Anhänger im üblichen Straßenverkehr transportabel. Insbesondere werden dadurch Spezial- bzw. Schwertransportmaßnahmen und/oder Sondergenehmigungen beim Transport vermieden.

Der in Figur 1 dargestellte Zustand der Abgasnachbehandlungsvorrichtung 1 entspricht - mit Ausnahme des aufgestellten Geländers 15 - einem Transportzustand der Abgasnachbehandlungsvorrichtung 1. Insbesondere sind in dem Transportzustand der Abgasnachbehandlungsvorrichtung 1 die erste Öffnung 5 und die zweite Öffnung 7 verschlossen. Zusätzlich ist in dem Transportzustand das Geländer 15 zusammengeklappt, insbesondere an die Arbeitsplattform 11 und/oder das Containerdach 9 angelegt und daran transportsicher fixiert.

Zudem zeigt Figur 1 mehrere Wartungsöffnungen 17, hier insbesondere vier Wartungsöffnungen. Zwei dieser Wartungsöffnungen, nämlich eine stirnseitige Doppeltür 19 sowie eine seitliche Doppeltür 21 sind dabei derart ausgebildet, dass der Container durch diese Doppeltüren für Wartungspersonal begehbar ist. Ferner können über diese großen Wartungsöffnungen 17, insbesondere die Doppeltüren 19, auch große Bauteile im Innern des Containers 3 insbesondere zu Wartungszwecken entnommen und/oder ausgetauscht werden.

**Fig. 2** zeigt die in Figur 1 dargestellte Abgasnachbehandlungsvorrichtung 1 in einer gegenüber Figur 1 um ca. 90° im Uhrzeigersinn gedrehten Darstellung, sodass hier eine einer in Figur 1 dargestellten erste Langseite 23 gegenüberliegende zweite Langseite 25 erkennbar ist. Anders als in Figur 1 ist hier die zweite Öffnung 7 nicht länger verschlossen. Vielmehr ist hier an der zweiten Öffnung 7 ein Abgaskamin 27 montiert, über welchen die nachbehandelten Abgase - also nach dem Durchlaufen der Katalysatoranlage - ausgestoßen werden.

Der Abgaskamin 27 ist ferner an einem Stützgerüst 29 befestigt. Dadurch ist die Stabilität des Abgaskamins 27 erhöht. Ferner ist dadurch auch die Montage des Abgaskamins 27 vereinfacht, insbesondere indem der Abgaskamin 27 und oder das Stützgerüst 29 mittels zumindest einer Befestigungsstruktur, ganz besonders einer Twistlock-Befestigung, an dem Container 3, insbesondere dem Containerdach 9 befestigt ist.

Zudem ist die Handhabbarkeit des Abgaskamins 27 dadurch verbessert, dass der Abgaskamin 27 fest mit dem Stützgerüst 29 verbunden ist. Somit kann der Abgaskamin 27 bei der Montage mittels des Stützgerüst 29 gegriffen und justiert werden. Indem das Stützgerüst 29 den Abgaskamin 27 in Umfangsrichtung umgreift, werden zudem Beschädigungen an dem Abgaskamin 27 insbesondere bei der Montage und dem Transport vermieden.

Weiter sind in Figur 2 weitere Wartungsöffnungen 17, insbesondere eine Wartungstür 31 zu erkennen, über welche der Container 3 für Wartungspersonal und/oder zur Steuerung der Abgasnachbehandlungsvorrichtung 1 begehbar ist. Einige der Wartungsöffnungen 17 sind vorliegend - auch im geschlossenen Zustand - zur Belüftung des Innenraumes luftdurchlässig als Lüftungsöffnungen 33 ausgebildet. Zusätzlich sind in Figur 2 rechts neben der Wartungstür 31 weitere, kleine Lüftungsöffnungen 33 erkennbar.

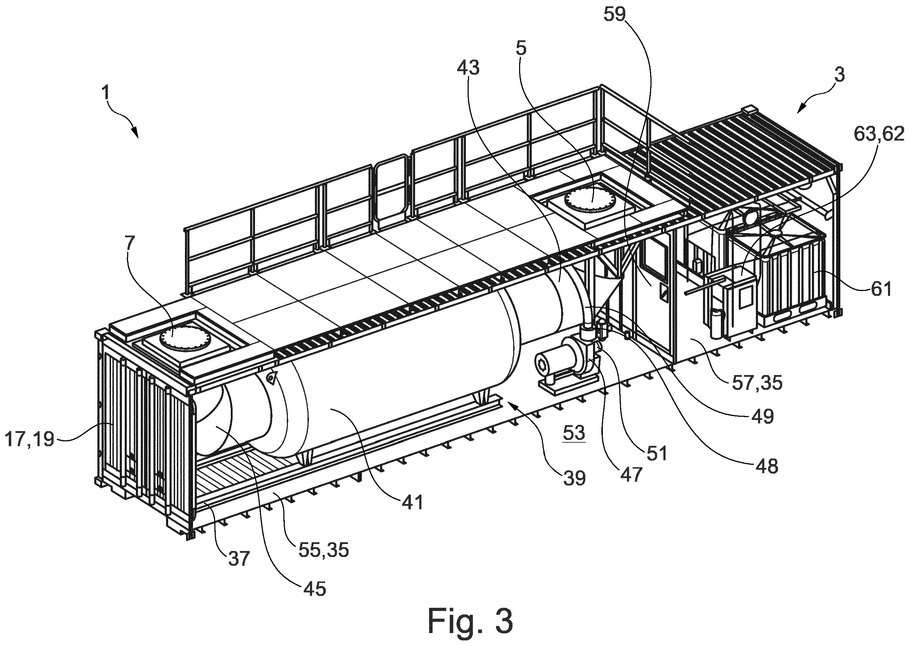

**Fig. 3** zeigt die Abgasnachbehandlungsvorrichtung 1 in einer perspektivischen Schnittdarstellung, wobei die zweite Langseite 25, welche dem Betrachter in Figur 2 zugewandt ist, weggeschnitten ist. Dadurch ist hier erkennbar, dass in einem Innenraum 35 des Containers 3 eine Schienenvorrichtung 37 angeordnet ist, auf welcher ein Teil der Katalysatoranlage 39, hier nämlich die Katalysatorvorrichtung 41 verlagerbar angeordnet ist. Dadurch ist zumindest ein Teil der Katalysatoranlage 39, insbesondere die Katalysatorvorrichtung 41, vorzugsweise die gesamte Katalysatoranlage 39 mittels der Schienenvorrichtung 37 mit geringem Kraftaufwand über die stirnseitige Doppeltür 19 aus dem Container 3 heraus verlagerbar, sodass die Wartung der Katalysatoranlage 39 vereinfacht ist.

Die in Figur 3 dargestellte Katalysatoranlage umfasst vorzugsweise einen SCR-Katalysator. Besonders bevorzugt umfasst die Katalysatoranlage zudem einen Oxidationskatalysator und/oder weitere Katalysatortypen. Damit ist eine besonders umfassende Abgasnachbehandlung möglich, wobei die Schadstoffe im Abgas weitgehend abbaubar sind.

Abweichend von dem in Figur 2 dargestellten Zustand der Abgasnachbehandlungsvorrichtung 1 ist hier in Figur 3 der Abgaskamin 27 nicht an der zweiten Öffnung 7 betriebsbereit montiert. Stattdessen sind die zweite Öffnung 7 und die erste Öffnung 5 - wie auch in dem in Figur 1 dargestellten Zustand - verschlossen.

Weiter zeigt Figur 3, dass die strömungstechnisch zwischen der ersten Öffnung 5 und der zweiten Öffnung 7 angeordnet Katalysatorvorrichtung 41 zuströmseitig über einen Zuströmpfad 43 mit der ersten Öffnung 5 und abströmseitig über einen Abströmpfad mit der zweiten Öffnung 7 strömungstechnisch verbunden ist. Dabei ist die Abgasnachbehandlungsvorrichtung 1 ausgebildet und eingerichtet, um ein über die erste Öffnung 5 zugeführtes Abgas einer insbesondere externen Brennkraftmaschine der Katalysatoranlage 39, insbesondere der Katalysatorvorrichtung 41, zuzuführen und - nach einer katalytischen Reaktion zur Schadstoffreduktion in der Katalysatorvorrichtung 41 - das nachbehandelte Abgas über den zweiten Strömungspfad 45 an die zweite Öffnung 7 weiterzuleiten und dort insbesondere über einen an die zweite Öffnung 7 angeschlossenen Abgaskamin 27 auszustoßen.

Dabei weist die Katalysatoranlage 39 vorzugsweise eine Frischluftzuführvorrichtung 47 auf, welche über eine erste Strömungsöffnung 48 der Frischluftzuführvorrichtung 47 strömungstechnisch mit der Katalysatorvorrichtung 41 zumindest mittelbar verbunden ist. Die zugeführte Luft wird dabei über einen Verbindungskanal 49 in den Zuströmpfad 43 eingeblasen. Die hier insbesondere als Frischluftgebläse ausgebildete Frischluftzuführvorrichtung 47 ist eingerichtet und ausgebildet, um über eine zweite Strömungsöffnung 51 Frischluft von einer Frischluftquelle aufzunehmen. Die Frischluftquelle 53 wird also vorzugsweise von einer Umgebung des Containers 3, insbesondere der Atmosphäre, bereitgestellt.

Die Menge an zugeführter Frischluft wird vorzugsweise in Abhängigkeit von einer an die Abgasnachbehandlungsvorrichtung 1 angeschlossene Brennkraftmaschine manuell oder automatisch bestimmt. Somit ist die Abgasnachbehandlungsvorrichtung 1 in Kombination mit einer Vielzahl verschiedenartiger Brennkraftmaschinen verwendbar, wobei durch Einstellen einer geeigneten Menge an zuzuführender Frischluft die verschiedenen Abgase der verschiedenartigen Brennkraftmaschinen effektiv nachbehandelbar und die darin enthaltenen Schadstoffe reduzierbar sind.

Die Frischluftzuführvorrichtung 47 ist hier insbesondere benachbart zu einer als Lüftungsöffnung 33 ausgebildeten Wartungsöffnung 17 angeordnet und vorzugsweise mit dieser strömungstechnisch verbunden. Somit kann Frischluft von außerhalb des Containers 3 von der Frischluftzuführvorrichtung 47 unmittelbar angesaugt werden.

Der Innenraum 35 des hier dargestellten Containers 3 ist insbesondere in zwei Unterräume unterteilt, nämlich einen Katalysatorraum 55 und einer Steuerraum 57. Die beiden Räume sind im Wesentlichen von einer Zwischenwand voneinander getrennt, wobei in der Zwischenwand eine Tür 59 angeordnet ist, wodurch eine Person zwischen Katalysatorraum 55 und Steuerraum 57 wechseln kann, ohne den Container 3 verlassen zu müssen. Dadurch ist die Arbeitssicherheit erhöht und die Geräuschbelastung von Personen in dem Steuerraum 57 reduziert.

In dem Innenraum 35, hier dem Steuerraum 57, ist zudem zumindest ein Reduktionsmittelreservoir 61, hier insbesondere zwei mit einem Reduktionsmittel befüllbare, insbesondere befüllte IBC-Container, angeordnet. Als Reduktionsmittel wird bevorzugt eine Urea-Lösung verwendet. Dieses Reduktionsmittelreservoir 61 ist über eine Reduktionsmittelversorgungsleitung mit der Katalysatoranlage 39 verbunden. Zum druckbeaufschlagten Eindüsen des Reduktionsmittels ist ferner eine Druckluftvorrichtung 62 in dem Innenraum 35 angeordnet und mit der Reduktionsmittelversorgungsleitung wirkverbunden.

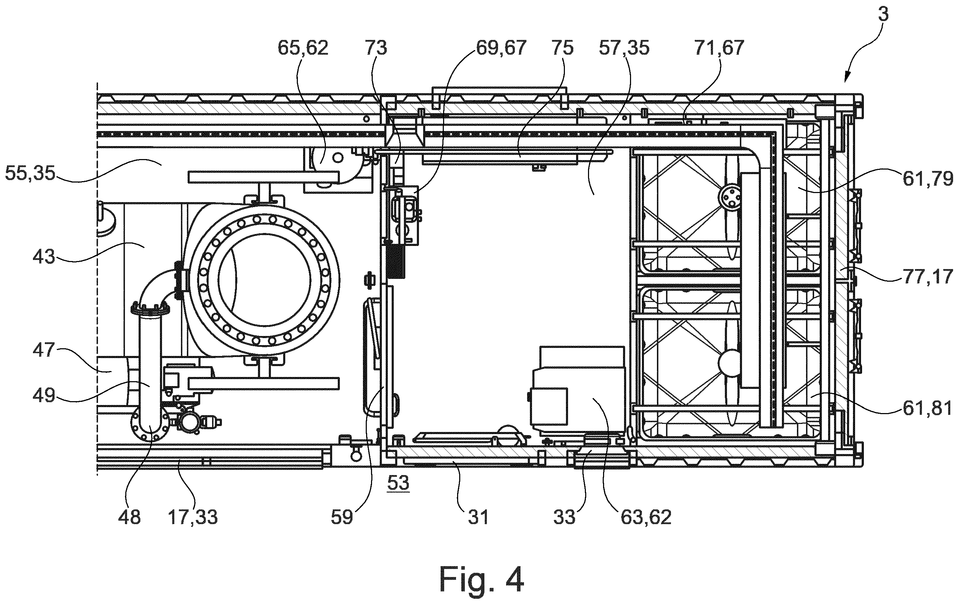

Wie in **Fig. 4** in einer Draufsicht auf einen Teil des Innenraums 35, insbesondere den Steuerraum 57 und einen Abschnitt des Katalysatorraums 55, ferner erkennbar ist, ist in dem Katalysatorraum 55 ein Druckluftbehälter 65 angeordnet, wobei der Druckluftbehälter 65 mit dem in dem Steuerraum angeordneten Kompressor 63 derart wirkverbunden ist, dass der Druckluftbehälter 65 mit einem von dem Kompressor 63 generierten Druck beaufschlagbar ist.

Die Druckluftvorrichtung 62 ist dabei als Ganzes mit der Reduktionsmittelversorgungsleitungen derart wirkverbunden, dass ein durch die Reduktionsmittelversorgungsleitungen hindurchfließendes Reduktionsmittel mit Druckluft beaufschlagbar und dadurch in die Katalysatorvorrichtung 41 und/oder dem Zuströmpfad 43 eindüsbar ist.

Zur Dosierung des Reduktionsmittels ist ferner in dem Steuerraum 57 eine Dosiervorrichtung 67 angeordnet, welche zumindest eine Dosiereinheit 69 und eine Dosierpumpe 71 aufweist. Die Dosierpumpe 71 ist dabei ausgebildet und eingerichtet, um aus dem Reduktionsmittelreservoir 61 Reduktionsmittel anzupumpen und über eine Verbindungsleitung 73 der Dosiereinheit 69 zuzuführen.

In Zusammenwirkung mit einem in dem Steuerraum 57 angeordneten Steuergerät 75 ist vorzugsweise in Abhängigkeit von einem anschließbaren und zum Anschluss vorgesehenen Brennkraftmaschinen-Typ eine Dosiermenge einstellbar, welche von der Dosiereinheit 69 entsprechend dosiert und mithilfe der Druckluftvorrichtung 62 dem Zuströmpfad 43 und/oder der Katalysatorvorrichtung 41 insbesondere druckluftbeaufschlagt zugeführt wird.

Die beiden Reduktionsmittelreservoire 61, welche hier als IBC-Container ausgebildet sind, sind vorzugsweise derart dimensioniert, dass zwei dieser Reduktionsmittelreservoire 61 entlang einer Querseite des Containers 3 passgenau in dem Innenraum 35, hier insbesondere dem Steuerraum 57, anordenbar sind. Dadurch ist der Platz in dem Container 3 effektiv genutzt und eine große Menge an Reduktionsmittel bereitgestellt.

Über eine weitere Wartungsöffnung, welche hier als weitere stirnseitige Doppeltür 77 ausgebildet ist, ist das Reduktionsmittelreservoir 61 als Ganzes aus dem Container 3 entnehmbar und/oder von außerhalb des Containers 3 betankbar.

Bevorzugt wird das Reduktionsmittel mittels der Dosierpumpe 71 aus einem ersten IBC-Container der beiden IBC-Container gepumpt, wobei ein zweiter IBC-Container der beiden IBC-Container mit dem ersten IBC-Container strömungstechnisch verbindbar, insbesondere verbunden ist und als Reservecontainer fungiert. Dabei ist der zweite IBC-Container bevorzugt über eine angebaute Nachfüllpumpe und vorzugsweise eine Zapfpistole mit dem ersten IBC-Container strömungstechnisch verbunden und eingerichtet, um den ersten IBC-Container bei Bedarf aufzufüllen. Dadurch ist eine weitgehend kontinuierliche Bereitstellung von Reduktionsmittel geschaffen. Insbesondere kann dadurch Reduktionsmittel auch während des Betriebs der Abgasnachbehandlungsvorrichtung 1 nachgefüllt werden.

Das Steuergerät 75 ist zudem insgesamt zur Steuerung der Katalysatoranlage 39 ausgebildet und eingerichtet. Dadurch ist eine zumindest teilweise automatisierte Steuerung der Katalysatoranlage 39 geschaffen. Insbesondere ist die Abgasnachbehandlungsvorrichtung 1 dadurch in Kombination mit verschiedenartigen Brennkraftmaschinen betreibbar, wobei die Abgase der verschiedenartigen Brennkraftmaschinen jeweils effektiv mittels der Abgasnachbehandlungsvorrichtung 1 nachbehandelbar sind.

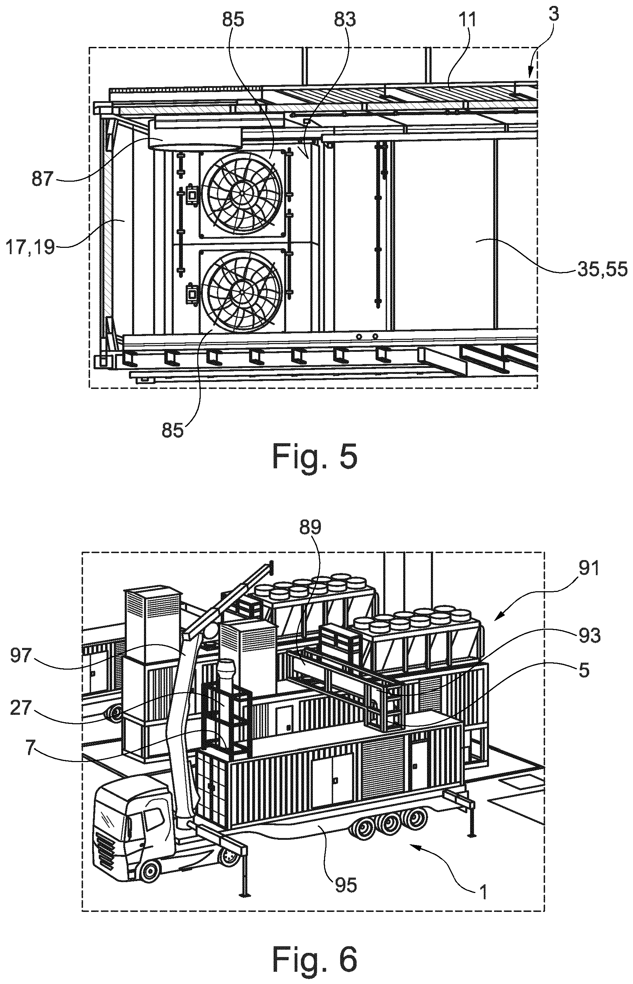

**Fig. 5** zeigt eine Wandung 83 des Containers 3, in welcher zur Raumtemperaturregelung des Innenraums 35 zumindest ein Axialventilator 85 angeordnet ist, hier insbesondere zwei Axialventilatoren 85. Die Axialventilatoren 85 sind vorzugsweise frequenzgesteuert ausgebildet und eingerichtet. Somit ist stets eine angemessene Temperierung des Innenraums 35, insbesondere des Katalysatorraums 55, und/oder eine Frischluftversorgung bereitgestellt.

In Figur 5 ist zur besseren Sichtbarkeit der Axialventilatoren 5 und 80 die Katalysatoranlage 39 nicht dargestellt. Dies entspricht somit im Wesentlichen der Ansicht des Katalysatorraums 55, nachdem zumindest ein Teil der Katalysatoranlage 39 insbesondere mittels der Schienenvorrichtungen 37 aus dem Innenraum 35 beispielsweise zu Wartungszwecken entnommen wurde.

Diese Entnahme der Katalysatoranlage 39 beziehungsweise eines Teils der Katalysatoranlagen 39, insbesondere der Katalysatorvorrichtung 41, kann im Zuge solcher Wartungsarbeiten insbesondere über die große Wartungsöffnung 17, also der in Figur 5 links dargestellten, stirnseitigen Doppelttür 19, erfolgen.

Aufgrund der nicht dargestellten Katalysatoranlage 39, insbesondere des nicht dargestellten Abströmpfads 45, ist in Figur 5 ferner ein innenseitiger Stutzen 87 der zweiten Öffnung 7 erkennbar. Dieser ist innenseitig der zweiten Öffnung 7 angeordnet und vereinfacht die Montage des Abströmpfads 45 an der zweiten Öffnung 7.

Die Druckluftvorrichtung 62, insbesondere der Kompressor 63, die Frischluftzuführvorrichtung 47 und/oder der Axialventilator 85 sind vorzugsweise in dem Innenraum 35 benachbart zu einer oder mehreren der Lüftungsöffnungen 33 angeordnet. Dadurch kann auf zuverlässige Weise der Luftbedarf, insbesondere Frischluftbedarf dieser Vorrichtungen gedeckt werden, wobei der konstruktive Aufwand niedrig ist.

**Fig. 6** zeigt die Abgasnachbehandlungsvorrichtung 1 im Betriebszustand, wobei ein Abgasauslass 89 einer Brennkraftmaschine 91 über ein Verbindungselement 93 mit der ersten Öffnung 5 der Abgasnachbehandlungsvorrichtung 1 verbunden ist. Zudem ist in dem hier dargestellten Betriebszustand der Abgaskamin 27 an der zweiten Öffnung 7 montiert. Dadurch ist das Abgas der Brennkraftmaschine 91, welche vorzugsweise eine stationär installierte Brennkraftmaschine 91 ist, insbesondere temporär und kostengünstig nachbehandelbar.

Das hier dargestellte Ausführungsbeispiel der Abgasnachbehandlungsvorrichtung 1 ist insbesondere auf einem Anhänger 95 angeordnet. Vorzugsweise ist die Abgasnachbehandlungsvorrichtung 1 als Anhänger 95, ganz besonders Lkw-Anhänger, ausgebildet. Somit ist die Abgasnachbehandlungsvorrichtung 1 sehr mobil und flexibel einsetzbar.

Zur Vereinfachung der Montage, insbesondere des Abgaskamins 27 und des Verbindungselement 93, weist der Anhänger 95 einen Montagekran 97 auf. Somit ist die Abgasnachbehandlungsvorrichtung nach Verlagerung an einen neuen Standort schnell und einfach in Betrieb versetzbar, insbesondere an die Brennkraftmaschine 91 anschließbar.

## Patentansprüche

1. Abgasnachbehandlungsvorrichtung (1) mit einer Katalysatoranlage (39) und einem Container (3), wobei die Katalysatoranlage (39) in einem Innenraum (35) des Containers (3) angeordnet ist, wobei der Container (3) zumindest zwei Öffnungen (5, 7) aufweist, wobei eine erste Öffnung (5) der zwei Öffnungen (5, 7) zuströmseitig mit der Katalysatoranlage (39) verbunden ist, und wobei eine zweite Öffnung (7) der zwei Öffnungen (5, 7) abströmseitig mit der Katalysatoranlage (39) verbunden ist, **dadurch gekennzeichnet, dass** der Container (3) zumindest eine Schienenvorrichtung (37) aufweist, wobei zumindest ein Teil der Katalysatoranlage (39) auf der Schienenvorrichtung (37) verlagerbar angeordnet ist.

2. Abgasnachbehandlungsvorrichtung (1) nach einem der vorhergehenden Ansprüche, **dadurch gekennzeichnet, dass** die Abgasnachbehandlungsvorrichtung (1) eine Arbeitsplattform (11) aufweist, die auf einem Containerdach (9) des Containers (3) angeordnet ist.

3. Abgasnachbehandlungsvorrichtung (1) nach einem der vorhergehenden Ansprüche, **dadurch gekennzeichnet, dass** die Abgasnachbehandlungsvorrichtung (1) einen Abgaskamin (27) aufweist, der - zumindest in einem Betriebszustand der Abgasnachbehandlungsvorrichtung (1) - außerhalb des Containers (3) an der zweiten Öffnung (7) montiert ist.

4. Abgasnachbehandlungsvorrichtung (1) nach einem der vorhergehenden Ansprüche, **dadurch gekennzeichnet, dass** die Katalysatoranlage (39) zur Versorgung mit Frischluft eine Frischluftzuführvorrichtung (47) aufweist, wobei die Frischluftzuführvorrichtung (47) eine erste Strömungsöffnung (48) aufweist, die zumindest mittelbar mit der Katalysatoranlage (39) verbunden ist, und wobei die Frischluftzuführvorrichtung (47) eine zweite Strömungsöffnung (51) aufweist, die zur strömungstechnischen Verbindung mit einer Frischluftquelle (53) ausgebildet und eingerichtet ist.

5. Abgasnachbehandlungsvorrichtung (1) nach einem der vorhergehenden Ansprüche, **dadurch gekennzeichnet, dass** die Katalysatoranlage (39) einen SCR-Katalysator aufweist, wobei in einem Innenraum (35) des Containers (3) zumindest ein Reduktionsmittelreservoir (61) angeordnet ist, welches über eine Reduktionsmittelversorgungsleitung mit der Katalysatoranlage (39) verbunden ist.

6. Abgasnachbehandlungsvorrichtung (1) nach einem der vorhergehenden Ansprüche, **dadurch gekennzeichnet, dass** in dem Innenraum (35) zum Eindüsen eines Reduktionsmittels eine Druckluftvorrichtung (62) angeordnet und mit der Reduktionsmittelversorgungsleitung wirkverbunden ist.

7. Abgasnachbehandlungsvorrichtung (1) nach einem der vorhergehenden Ansprüche, **dadurch gekennzeichnet, dass** in dem Innenraum (35) ein Steuergerät (75), welches zur Steuerung der Katalysatoranlage (39) ausgebildet und eingerichtet ist, angeordnet ist.

8. Abgasnachbehandlungsvorrichtung (1) nach einem der vorhergehenden Ansprüche, **dadurch gekennzeichnet, dass** die Abgasnachbehandlungsvorrichtung (1) als Fahrzeug oder als Fahrzeuganhänger (95) ausgebildet ist.

9. Brennkraftmaschine (91) mit einer Abgasnachbehandlungsvorrichtung (1) gemäß einem der vorhergehenden Ansprüche, wobei ein Abgasauslass (89) der Brennkraftmaschine (91) mit der ersten Öffnung (5) der Abgasnachbehandlungsvorrichtung (1) strömungstechnisch verbunden ist.

## Claims

1. Exhaust gas aftertreatment device (1) with a catalytic converter assembly (39) and a container (3), wherein the catalytic converter assembly (39) is arranged in an interior (35) of the container (3), wherein the container (3) has at least two openings (5, 7), wherein a first opening (5) of the two openings (5, 7) is connected on an upstream side to the catalytic converter assembly (39), and wherein a second opening (7) of the two openings (5, 7) is connected on a downstream side to the catalytic converter assembly (39), **characterised in that** the container (3) has at least one rail device (37), wherein at least a part of the catalytic converter assembly (39) is arranged displaceably on the rail device (37).

2. Exhaust gas aftertreatment device (1) according to one of the preceding claims, **characterised in that** the exhaust gas aftertreatment device (1) has a working platform (11) which is arranged on a container roof (9) of the container

3. Exhaust gas aftertreatment device (1) according to one of the preceding claims, **characterised in that** the exhaust gas aftertreatment device (1) has an exhaust gas chimney (27) which - at least in an operating state of the exhaust gas aftertreatment device (1) - is mounted outside the container (3) at the second opening (7).

4. Exhaust gas aftertreatment device (1) according to one of the preceding claims, **characterised in that** the catalytic converter assembly (39) has a fresh air supply device (47) for supplying fresh air, wherein the fresh air supply device (47) has a first flow opening (48) which is at least indirectly connected to the catalytic converter assembly (39), and wherein the fresh air supply device (47) has a second flow opening (51) which is designed and set up to be connected fluidically to a fresh air source (53).

5. Exhaust gas aftertreatment device (1) according to one of the preceding claims, **characterised in that** the catalytic converter assembly (39) has an SCR catalytic converter, wherein at least one reducing agent reservoir (61) is arranged in an interior (35) of the container (3) and is connected to the catalytic converter assembly (39) via a reducing agent supply conduit.

6. Exhaust gas aftertreatment device (1) according to one of the preceding claims, **characterised in that** a compressed air device (62) for injecting a reducing agent is arranged in the interior (35) and is operatively connected to the reducing agent supply conduit.

7. Exhaust gas aftertreatment device (1) according to one of the preceding claims, **characterised in that** a control unit (75), which is designed and set up to control the catalytic converter assembly (39), is arranged in the interior (35).

8. Exhaust gas aftertreatment device (1) according to one of the preceding claims, **characterised in that** the exhaust gas aftertreatment device (1) is designed as a vehicle or as a vehicle trailer (95).

9. Internal combustion engine (91) with an exhaust gas aftertreatment device (1) according to one of the preceding claims, wherein an exhaust gas outlet (89) of the internal combustion engine (91) is fluidically connected to the first opening (5) of the exhaust gas aftertreatment device (1).

## Revendications

1. Dispositif de post-traitement des gaz d'échappement (1) avec un système catalytique (39) et un conteneur (3), dans lequel le système catalytique (39) est disposé dans un espace intérieur (35) du conteneur (3), dans lequel le conteneur (3) présente au moins deux ouvertures (5, 7), dans lequel une première ouverture (5) des deux ouvertures (5, 7) est reliée au système catalytique (39) côté arrivée, et dans lequel une deuxième ouverture (7) des deux ouvertures (5, 7) est reliée au système catalytique (39) côté évacuation, **caractérisé en ce que** le conteneur (3) présente au moins un dispositif de rails (37), dans lequel au moins une partie du système catalytique (39) est disposée d'une manière déplaçable sur le dispositif de rails (37).

2. Dispositif de post-traitement des gaz d'échappement (1) selon l'une des revendications précédentes, **caractérisé en ce que** le dispositif de post-traitement des gaz d'échappement (1) présente une plate-forme de travail (11) qui est disposée sur un toit de conteneur (9) du conteneur (3).

3. Dispositif de post-traitement des gaz d'échappement (1) selon l'une des revendications précédentes, **caractérisé en ce que** le dispositif de post-traitement des gaz d'échappement (1) présente une cheminée de gaz d'échappement (27) qui est montée - au moins dans un état de fonctionnement du dispositif de post-traitement des gaz d'échappement (1) - à l'extérieur du conteneur (3) sur la deuxième ouverture (7).

4. Dispositif de post-traitement des gaz d'échappement (1) selon l'une des revendications précédentes, **caractérisé en ce que** le système catalytique (39) pour l'alimentation en air frais présente un dispositif d'alimentation en air frais (47), dans lequel le dispositif d'alimentation en air frais (47) présente une première ouverture d'écoulement (48), qui est reliée au moins directement au système catalytique (39), et dans lequel le dispositif d'alimentation en air frais (47) présente une deuxième ouverture d'écoulement (51), qui est conçue et montée pour une liaison en termes de technique des fluides à une source d'air frais (53).

5. Dispositif de post-traitement des gaz d'échappement (1) selon l'une des revendications précédentes, **caractérisé en ce que** le système catalytique (39) présente un catalyseur SCR, dans lequel dans un espace intérieur (35) du conteneur (3) est disposé au moins un réservoir d'agents de réduction (61), lequel est relié au système catalytique (39) par une conduite d'alimentation en agents de réduction.

6. Dispositif de post-traitement des gaz d'échappement (1) selon l'une des revendications précédentes, **caractérisé en ce que** dans l'espace intérieur (35) un dispositif d'air comprimé (62) est disposé pour l'injection d'un agent de réduction et est en liaison fonctionnelle avec la conduite d'alimentation en agents de réduction.

7. Dispositif de post-traitement des gaz d'échappement (1) selon l'une des revendications précédentes, **caractérisé en ce que** dans l'espace intérieur (35) est disposé un appareil de commande (75) qui est conçu et monté pour commander le système catalytique (39).

8. Dispositif de post-traitement des gaz d'échappement (1) selon l'une des revendications précédentes, **caractérisé en ce que** le dispositif de post-traitement des gaz d'échappement (1) est conçu comme un véhicule ou comme une remorque de véhicule (95).

9. Moteur à combustion interne (91) avec un dispositif de post-traitement des gaz d'échappement (1) selon l'une des revendications précédentes, dans lequel une évacuation des gaz d'échappement (89) du moteur à combustion interne (91) est reliée en termes de technique des fluides à la première ouverture (5) du dispositif de post-traitement des gaz d'échappement (1).
